# EUROPEAN PATENT APPLICATION

(11) **EP 4 848 156 A1**
(43) Date of publication of application: **02.12.2026**
(21) Application number: 25179785.8
(22) Date of filing: 30.05.2025
(51) Int. Cl.: G06N 10/40, H04B 10/70

(54) **TECHNIQUES TO ENABLE DISTRIBUTED QUANTUM COMPUTING IN A QUANTUM COMMUNICATION NETWORK**

(71) Applicant: Deutsche Telekom AG, 53113 Bonn (DE)
(72) Inventor: Dr. GEITZ, Marc, 58089 Hagen (DE); DÖRING, Ronny, 16775 Sonnenberg (DE); YIN, Ming, 16341 Panketal (DE); Dr. BRAUN, Ralf-Peter, 12305 Berlin (DE); RITTER, Michaela, 10551 Berlin (DE); RIBEIRO SENA, Matheus, 14129 Berlin (DE)
(74) Representative: karo IP

(57) **Abstract**

A quantum computing network node (202A, 202B), the quantum computing network node (202A, 202B) being deployed in an application plane (102) and comprising:
a) a quantum computer (204A, 204B) of claim 8;
b) a quantum memory (230A, 230B) associated with the quantum computer (204A, 204B), the quantum memory (230A, 230B) being configured to store quantum states;
c) a classical communication interface (206) configured to transmit and/or receive classical measurement results over a classical communication link (206);
d) wherein the quantum computing network node (202A, 202B) is configured to perform:
i) performing an entanglement measurement on a quantum states stored in the quantum memory (230A, 230B), and transmitting a classical measurement result via the classical communication interface (206);
and/or
ii) applying a quantum correction to a quantum state stored in the quantum memory (230A, 230B) based on a received classical measurement result.

## Description

The present invention relates to quantum communication and quantum computing. In particular, the invention concerns a quantum communication system and a quantum computing network node that facilitate quantum state transfer using entanglement-based protocols. The invention further relates to methods for quantum information exchange between distributed quantum computing nodes, employing techniques such as quantum state teleportation and entanglement swapping.

Quantum communication enables the transmission of quantum states across spatially separated quantum computing devices by exploiting the phenomenon of quantum entanglement. In conventional quantum networks, quantum states are either directly transmitted via optical channels or teleported using entangled photon pairs and Bell State Measurements (BSM).

Existing quantum networks typically rely on direct entanglement distribution between two nodes or through intermediate quantum repeaters. These approaches face several challenges, including loss of quantum coherence over long-distance transmission due to environmental noise for example if a first quantum computer wants to share a quantum state with a second quantum computer.

In view of the above, it is an objective of the present invention to at least partially overcome the drawbacks of the state-of-the-art.

This objective is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

According to a first aspect of the invention, a method for transferring quantum information between quantum computer A and quantum computer B is provided. The method comprises:
a) Providing a quantum computing network node A at a first network location, the quantum computing network node A comprising a quantum computer A and a quantum memory A; wherein a quantum application is running on the quantum computer A, in particular wherein the quantum application on quantum computer A can consume a first quantum state of an entangled pair for running the application;
b) Providing a quantum computing network node B at a second network location, the quantum computing network node B comprising a quantum computer B and a quantum memory B; wherein the quantum application is running on the quantum computer B, in particular wherein the quantum application on quantum computer B can consume a second quantum state of an entangled pair for running the application;
c) Providing an initially entangled quantum state pair in an original quantum state, wherein a first quantum state of the initially entangled quantum state pair is stored in the quantum memory A and a second quantum state of the initially entangled quantum state pair is stored in the quantum memory B; the initially entangled quantum state pair can be provided according to a distributing rate by the EDaaS of the provider;
d) Performing an entanglement measurement, in particular a Bell State Measurement (BSM), at the quantum memory A on the first quantum state of the initially entangled quantum state pair stored in the quantum memory A, generating a classical measurement result;
e) Providing the classical measurement result from the quantum computing network node A to the quantum computing network node B via a first classical communication link as a first option or providing the classical measurement result from the quantum computing network node A to the quantum computer A via a second classical communication link as a second option;
f) Loading the second quantum state of the initially entangled quantum state pair, in particular after postprocessing, from the quantum memory B to the quantum computer B as the first option or post-processing a qubit stored within a quantum computer B by post-processing means of the quantum computer B and/or post-processing a qubit stored within a quantum computer A by post-processing means of the quantum computer A as the second option. In particular, each post-processing depends on the measurement result. Hence, in the second option which is the "entanglement swapping case", both the quantum computers can apply the appropriate post-processing means to arrive at the "final" entanglement state with respect to a qubit in the quantum computer A and a corresponding qubit in quantum computer B;
g) Applying a quantum correction by post-processing means at the quantum memory B to the second quantum state of the initially entangled quantum state pair stored in the quantum memory B as the first option or applying the quantum correction on the qubit within quantum computer A by post-processing means of the quantum computer A as the second option, wherein in each case the quantum correction is performed depending on the at least one classical measurement result, in particular by using at least one quantum gate operation, wherein the quantum correction transforms the second quantum state in the first option or the qubit in the second option into a final entangled quantum state shared between the quantum computer A and quantum computer B.

The letters a) to g) do not indicate a specific ordering of the steps of the method.

The method is implemented using two quantum computing network nodes (A and B), each comprising a quantum computer and a quantum memory capable of storing entangled quantum states. The entanglement distribution can be achieved through various quantum network protocols, such as using entangled photon pairs generated by a quantum service provider and distributed to the quantum memories at nodes A and B.

The classical measurement result is to be understood that the result is stored in bits and can be sent over standard communications channels, e.g. over fiber optics or radio waves. It can simply a value of the measurement. Or if the measurement checks a condition, it can be a "yes" or "no", encoded as "1" or "0". Non-classical channels or links are configured to transport quantum states - if possible without changing the quantum state.

The technical implementation of the Bell State measurement depends on the technology of the quantum computer.

Upon receiving the classical measurement result, quantum memory B applies quantum corrections to the stored second quantum state. These corrections ensure that the final quantum state at quantum memory B (first option) or computer B (second option) is correctly reconstructed. The final quantum state can either replicate the original quantum state from quantum computer A (teleportation) or establish entanglement between quantum computer A and quantum computer B (entanglement swapping), depending on the specific application scenario.

The method provides several technical advantages. By relying on entanglement-based quantum state transfer, the method eliminates the need for direct transmission of fragile quantum states, which would otherwise degrade due to environmental noise or losses in fiber-optic channels over long distances. It supports both Quantum State Loading (teleportation) and Entanglement Swapping, making it adaptable for different quantum communication applications, such as secure quantum key distribution (QKD) and distributed quantum computing. By leveraging pre-distributed entanglement, the method reduces the need for real-time entanglement generation, which is often a bottleneck in quantum networks. Since the method enables entanglement-based communication between distributed quantum computing network nodes, it provides a foundation for large-scale quantum networks where multiple nodes interact without direct quantum links. Furthermore, by transmitting classical measurement results instead of quantum states, the method allows for error correction at the receiver side, increasing the robustness of quantum information transfer.

In an embodiment, the method is implemented such that the initially entangled quantum state pair is pre-distributed from a network provider plane by a quantum service provider to the quantum computing network node A and the quantum computing network node B and then stored in the quantum memory A and the quantum memory B, respectively.

The pre-distribution of entanglement allows the quantum computing network nodes to store entangled quantum states before the actual quantum state transfer process between the quantum computers begins. This can be achieved by generating entangled photon pairs at a quantum service provider and sending one photon to each quantum computing network node over optical fiber links or free-space optical communication channels. Once received, the quantum states are stored in quantum memory devices based on superconducting circuits, ion traps, or atomic ensembles.

By using pre-distributed entanglement, the method reduces the latency associated with real-time entanglement generation, allowing for faster execution of quantum state transfer operations. Furthermore, the generation of entangled quantum states can be shifted from quantum computing network nodes that can be run by clients, users or the like to "some" quantum service providers that can be for example telecommunication providers. This Method is more efficient as if every user would have to generate the entangled pair of quantum states. Additionally, this approach improves the scalability of quantum networks by ensuring that entangled resources are available on demand rather than requiring continuous real-time entanglement generation.

In an embodiment, the method comprising:
- in the first option called "Quantum State Loading" the following steps are performed:
   ∘ Loading a photon from the quantum computer A into the quantum memory A, wherein the photon is entangled with a qubit of the quantum computer A; hence, the quantum computer A and the quantum memory A need to be configured to enable this loading process while preserving the entanglement between the photon and the qubit;
   ∘ Performing the entanglement measurement, in particular at the quantum memory A, between the first quantum state and the quantum state of the loaded photon; The first quantum state of the photon of the initially entangled pair provided by the Entanglement Distribution as a Service (EDaaS);
   ∘ Extracting or Retrieving the final quantum state from the quantum memory B; the final quantum state can be obtained by applying the respective quantum corrections on the photon that shall be loaded into quantum computer B; the current quantum state of the respective photon quantum memory B is known because it is the quantum state of the initially provided entangled pair by the EDaaS;
   ∘ Injecting or loading the final quantum state, in particular as a photon, into the quantum computer B, such that the final entangled quantum state is shared between the quantum computer A and quantum computer B and is available for quantum computation at the quantum computer B; or
- in the second option called "Entanglement Swapping" the following steps are performed:
   ∘ Loading a first photon from the quantum computer A into the quantum memory A, wherein the first photon is entangled with the qubit of the quantum computer A and loading a second photon from the quantum computer B into the quantum memory B, wherein the second photon is entangled with a second qubit of the quantum computer B;
   ∘ Performing the entanglement measurement, in particular at the quantum memory A, between the first quantum state distributed by the EDaaS and the quantum state of the first loaded photon and performing a further entanglement measurement, in particular at the quantum memory B, between the second quantum state distributed by the EDaaS and the quantum state of the second loaded photon to obtain a further entanglement measurement result;
   ∘ Providing the further entanglement measurement result via a third classical communication link to the quantum computer B;
   ∘ Applying the quantum correction on the second qubit within quantum computer B by post-processing means of the quantum computer B, in particular by using at least one quantum gate operation or no processing is being applied if both BSM yield 0, wherein the quantum correction transforms the second qubit into the final entangled quantum state shared between the quantum computer A and quantum computer B.
   ∘ The quantum correction is done in a way that the first qubit of the quantum computer A and the second qubit of the quantum computer B share the quantum state of the initially entangled pair.

In Quantum State Loading, the second quantum state is converted into a transmittable form, such as a photon, and then injected into the quantum processor for further computation. In Entanglement Swapping, two locally prepared entangled states are used to enable entanglement transfer, ensuring that quantum computers A and B are entangled without requiring direct quantum state transfer between them.

These approaches allow the system to enable distributed quantum computing. By supporting both options, the method is adaptable to various quantum network architectures, including quantum repeaters and distributed quantum computing environments.

The first option 1 (Quantum State Loading) and the second option 2 (Entanglement Swapping) each have specific advantages depending on the intended use case. Quantum State Loading requires only one Bell State Measurement (BSM), making it simpler to implement with lower resource requirements. It allows the transfer of a quantum state from quantum computer A to quantum computer B, which is beneficial when teleporting a specific quantum state for further processing. Additionally, Quantum State Loading requires transmitting of only a single classical measurement result, reducing classical communication overhead. This approach is particularly useful when a quantum network node needs to send computation results to another node without maintaining long-term entanglement.

Entanglement Swapping is well-suited for large-scale quantum networks. The "Entanglement Swapping" option requires more effort during the preparation phase, particularly in coordination with the EDaaS infrastructure, but enables integrated algorithms for distributed quantum computing. While Entanglement Swapping requires two Bell State Measurements and the preparation of additional locally entangled quantum states, it provides greater flexibility by establishing entanglement between two quantum computers without directly transmitting a quantum state. This method is particularly advantageous for distributed quantum computing, where multiple quantum computers remain entangled and can interact without requiring a direct quantum link.

This implementation enables accurate quantum state transfer while minimizing errors caused by decoherence. Additionally, by performing two Bell State Measurements in Entanglement Swapping, the method ensures that quantum entanglement is securely established even across nodes that are not directly connected via a quantum channel.

The results of the entanglement measurement, in particular the Bell State measurement, can be evaluated by a dedicated algorithm implemented on a processing unit associated to the quantum computing network node, wherein the processing unit comprises an interface to receive the respective measurement result.

In an embodiment, the method is implemented such that the quantum corrections applied in step g) are determined based on the classical measurement results of one or more Bell State Measurements, such that:
- In the first option called "Quantum State Loading":
   ∘ The entanglement measurement, in particular the BSM, can be evaluated to yield the classical measurement result. If the classical measurement result indicates the (desired) shared entangled quantum state between quantum computer A and quantum computer B then no quantum correction is applied; The classical measurement indicates a projection in Bell base, which means that the entanglement had been swapped and that the computers share an entangled state.
   ∘ If the classical measurement result indicates a non-entangled shared entangled quantum state between quantum computer A and quantum computer B, a Pauli-X (bit flip) and/or Pauli-Z (phase flip) gate is applied to the second quantum state of the initially entangled quantum state pair in the quantum memory B before injecting it into the quantum computer B. The result is "non-entangled shared entangled quantum state" if the Bell State measurement between the loaded first photon from quantum computer A into the quantum memory A and the photon of the initially entangled pair within quantum computer A is not positive; or
- in the second option called "Entanglement Swapping": The classical measurement results of both the entanglement measurement performed at the quantum memory A and the Bell State Measurement performed at the quantum memory B determine whether a quantum correction is applied in a way that:
   ∘ If the classical measurement results indicate the shared entangled quantum state between quantum computer A and quantum computer B then no quantum correction is applied,
   ∘ if the classical measurement results indicate a non- entangled quantum state between quantum computer A and quantum computer B then a Pauli-X (bit flip) and/or Pauli-Z (phase flip) gate is applied to the to the qubit within quantum computer A and/or the further qubit within quantum computer B to obtain the shared entangled quantum state between quantum computer A and quantum computer B. The non-entangled quantum state results if any of the photons loaded in the respective memory deviates from the quantum state of the initially entangled pair of photons. Quantum correction needs only to be applied on the qubit whose loaded photon deviates from the quantum state of the initially entangled pair of photons.

The Shared Entangled State is the final state in QM A/B. The Original Entangled State is the original state in QM A. This can also be stated as follows: The result of the Bell State Measurements (BSM) determines the specific quantum correction operations to be applied to the qubits involved. Depending on the measurement result, different quantum gate operations are required. If the BSM yields the result "00", no correction is applied. If the result is "01", a Pauli-X gate (bit flip) is applied to the respective qubit. A result of "10" requires the application of a Pauli-Z gate (phase flip), while a result of "11" necessitates the sequential application of both a Pauli-X and a Pauli-Z gate. The correction is applied to the qubit depending on the selected method option: in the first option, the correction is applied to the second quantum state stored in the quantum memory B; in the second option, the correction is applied to the qubits of both quantum computer A and quantum computer B, as needed.

The application of quantum corrections ensures that the final quantum state at quantum computer B is properly reconstructed, regardless of measurement-induced transformations during the quantum state transfer process. In Quantum State Loading, only one correction is required based on a single classical measurement result, whereas in Entanglement Swapping, both measurement results must be considered to determine the correct set of quantum corrections.

By applying quantum corrections based on classical measurement results, the method ensures that quantum information remains intact after state transfer or entanglement swapping. This enhances the robustness of quantum communication, reduces errors due to decoherence, and allows for more reliable entanglement-based quantum networking.

In an embodiment, the method is implemented such that the quantum computing network node A and the quantum computing network node B are both deployed in the application plane, such that the quantum memory A and the quantum memory B store entangled quantum states independent of real-time quantum state distribution from the network provider plane. The classical communication link between the network node A and network node B is also established over the application plane, in particular for sharing the measurement results.

Because the quantum computing network nodes are deployed in the application plane, the entangled quantum states required for quantum communication are stored and processed without needing real-time entanglement distribution from the network provider plane. This means that once entanglement has been initially established and stored in quantum memories, the actual quantum state transfer between quantum computers A and B does not require further involvement of the network provider plane. The application plane thus operates autonomously, ensuring that entangled quantum states are available for processing whenever needed.

By removing the network provider plane from the actual quantum state exchange, the method reduces latency and dependence on external quantum entanglement sources. This improves network efficiency, as quantum computing network nodes do not have to wait for fresh entanglement to be distributed in real time. Additionally, it enhances security and robustness, as quantum communication remains independent of centralized infrastructure, reducing the risk of entanglement loss due to transmission errors or network congestion in the provider plane.

In an embodiment, the method is implemented such that the quantum computing network node A and the quantum computing network node B use a common timing signal for synchronization, where the timing signal is being derived from a network provider plane or generated independently within the application plane.

A common timing signal ensures that quantum operations, such as entanglement measurements and quantum state corrections, occur in a coordinated manner at both quantum computing network nodes. This synchronization is crucial for reducing timing mismatches that could introduce errors in quantum state processing. The timing signal can be provided by an external network provider plane, such as a quantum clock distribution system, or generated internally within the application plane using local oscillators or phase-locked loop circuits.

By ensuring that both quantum computing network nodes operate on the same time reference, the method improves the accuracy and stability of quantum state transfer. Synchronization reduces the likelihood of measurement inconsistencies, prevents decoherence caused by timing drift, and enables high-fidelity quantum communication, especially in distributed quantum computing applications.

In an embodiment, the method is implemented such that each quantum computing network node comprises at least one metadata memory, the at least one metadata memory storing a logical ID of the quantum state stored in the quantum memory, the qubit within the Quantum Computer (QC), the storage location of the quantum state within the quantum memory, the storage location of the qubit within the QC, and/or the time at which the quantum state and/or the qubit was stored, wherein the data, in particular the logical ID of the quantum state, is extracted from the metadata memory and shared over the classical communication link with the other quantum computing network node, such that each quantum computing network node identifies the quantum states that originally formed the initially entangled quantum state pair.

The at least one metadata memory allows the quantum computing network nodes to track and manage entangled quantum states efficiently and/or can also protect the respective quantum memory from direct requests from other entities. By storing a logical ID, storage location, and timestamp, and entanglement partner, the system ensures that the correct quantum states and/or qubits are retrieved and used for quantum operations. This is especially important when multiple entangled pairs are stored within the quantum memory, as it prevents mismatches between quantum states during entanglement swapping or quantum teleportation. The logical ID can be extracted and transmitted over the classical communication link, allowing the receiving node to verify that the quantum state it processes corresponds to the correct entangled pair.

By implementing metadata memory, the method improves the scalability and reliability of quantum communication networks. It allows for parallel processing of multiple entangled quantum states, prevents synchronization errors in multi-node quantum systems, and ensures that each quantum computing network node can correctly associate quantum states without ambiguity.

According to a second aspect of the invention, a quantum computer configured to execute quantum operations is disclosed, the quantum computer comprising at least one of:
a) a classical communication interface; via the classical communication interface the entanglement measurement results are received;
b) a first quantum memory interface configured to load photons into a quantum memory, wherein the photons are entangled with a qubit of the quantum computer, and/or a second quantum memory interface configured to receive a photon from a second quantum computer;
c) a metadata memory configured to store information associated with quantum states or qubits, including a logical identifier of the quantum state or the qubit, the storage location of the qubit within the quantum computer, and a timestamp indicating the time of storage; and/or
d) post-processing means configured to apply quantum corrections to at least one of its qubits, in particular by using at least one quantum gate operation, based on classical measurement results received via the classical communication interface, wherein the quantum corrections transform the at least one qubit into a final entangled quantum state shared between the quantum computer and another quantum computer. The quantum computer according to the invention is configured to execute quantum operations and is designed with specific hardware and functional components that enable it to interact efficiently with quantum memories and other network nodes in a quantum communication system.

The quantum computer comprises a classical communication interface that enables the exchange of classical data, in particular classical measurement results, with other quantum computing network nodes or with a quantum memory of its own node. The classical measurement results enable to carry out the correct quantum corrections.

The first quantum memory interface is provided, which is configured to load photons into a quantum memory. These photons are entangled with qubits of the quantum computer, allowing the quantum computer to write quantum information into the memory or participate in entanglement distribution processes. In addition, the quantum computer interface is configured to receive photons from a quantum memory, enabling the quantum computer to access quantum states that were stored externally or transmitted over a quantum channel, e.g. in the case of the photon loading (the first option). The combination of loading and receiving interfaces allows the quantum computer to support both quantum state preparation and quantum state consumption, making it versatile for different communication and computation protocols.

The metadata memory is configured to store information associated with the quantum states handled by the quantum computer. This includes a logical identifier of a quantum state or qubit, the storage location within the quantum memory, and a timestamp indicating when the quantum state or the qubit was stored, it can also comprise information about the entanglement partner node. This metadata enables the quantum computer to track, manage, and synchronize quantum states across complex operations, ensuring correct identification and alignment of qubit resources. It also plays a critical role in multi-node quantum networks, where entangled pairs must be matched correctly between sender and receiver. The metadata memory (MM) of the quantum computer can have additional functionalities beyond the mere storage of metadata. In particular, the MM of the quantum computer can receive time synchronization signals from the Entanglement Distribution-as-a-Service (EDaaS) infrastructure of the network provider plane. This ensures that all time-critical operations within the quantum computer are precisely synchronized, which is especially important for distributed quantum algorithms and protocols such as quantum teleportation and entanglement swapping. Furthermore, the metadata memory of the quantum computer can interact with other metadata memories within the same network node, in particular with the MM of the quantum memory. This interaction allows, for example, negotiation and agreement on the logical identifiers (IDs) of quantum states or entangled states so that both components - the quantum computer and the quantum memory - maintain consistent and coordinated information about the identity and status of the involved quantum objects. This capability improves coordination within the node, reduces resource management conflicts, and facilitates error-free execution of quantum protocols that rely on precisely linked quantum IDs.

The post-processing means are configured to apply quantum corrections to at least one of the quantum computer's qubits. These corrections are typically determined by classical measurement results received via the classical communication interface and may include operations such as Pauli-X (bit flip) or Pauli-Z (phase flip) gates, among others. The quantum corrections are essential to complete protocols such as quantum teleportation or entanglement swapping. Specifically, they transform the qubit into a final entangled quantum state that is correctly aligned and correlated with another quantum computer. Without these corrections, the quantum states would not correspond to one of the four Bell states.

The interplay of these components enables the quantum computer to participate flexibly in distributed quantum computing, long-distance quantum communication, and quantum network operations. The combined ability to handle quantum and classical communication, manage metadata, and perform quantum corrections makes the quantum computer an integral component of advanced quantum networks, capable of supporting scalable and robust quantum applications.

In one embodiment, the quantum computer is further configured to adapt its photon loading rate into the quantum memory to match an entanglement distribution rate provided by the Entanglement Distribution-as-a-Service (EDaaS) infrastructure of the network provider plane. This adaptive mechanism ensures that the quantum computer can continuously load photons into the quantum memory without overloading the system or causing idle waiting periods.

Specifically, the photon loading process of the quantum computer is dynamically synchronized with the entanglement distribution process, so that neither the quantum computer nor the EDaaS infrastructure has to wait for the other to complete its respective tasks. This coordination avoids processing bottlenecks, prevents congestion in the handling of quantum states, and ensures that quantum resources are utilized efficiently. As a result, the overall system performance and the throughput of quantum operations are optimized, which is particularly advantageous in high-speed or large-scale quantum networks where a high volume of entangled states must be handled without interruption. One could also state that the Photon Loading protocol represents the simpler approach for this task, as it requires only a single entanglement swapping operation followed by post-processing.

According to a third aspect of the invention, a quantum computing network node is provided, the quantum computing network node being deployed in an application plane and comprising:
a) a quantum computer configured to execute quantum operations, in particular a quantum computer as described before;
b) a quantum memory associated with the quantum computer, the quantum memory being configured to store quantum states;
c) a classical communication interface configured to transmit and/or receive classical measurement results over a classical communication link;
d) wherein the quantum computing network node is configured to perform:
   i) performing an entanglement measurement on a quantum state stored in the quantum memory, and transmitting a classical measurement result via the classical communication interface;
      and/or
   ii) receiving at least one classical measurement result, in particular receiving a quantum state from its quantum computing network node, and applying a quantum correction to a quantum state stored in the quantum memory based on the received classical measurement result (first option) or applying the quantum correction to the qubit of the quantum computer.

The quantum computing network node provides the hardware, software and processing capabilities required to execute entanglement-based quantum communication. The quantum memory enables storage of entangled quantum states, allowing the system to function without real-time reliance on entanglement distribution. The classical communication interface ensures that measurement results can be exchanged between network nodes, enabling quantum state transfer and entanglement swapping. The flexibility of the network node allows it to function as either a sender or receiver, adapting to different quantum communication architectures.

Hence, the quantum computing network node is being configured to at least perform one of the steps of the method described above. In particular, the quantum computing network node provided is being configured to execute all the steps of the method described above that are technically associated with it.

By deploying the quantum computing network node in the application plane, the system eliminates the need for direct real-time involvement of a network provider plane during quantum state exchange. This enhances autonomy, reduces latency, and increases scalability, enabling reliable quantum computing networks that operate efficiently without continuous external entanglement distribution.

In one embodiment of the invention, each quantum computing network node comprises both a quantum computer and an associated quantum memory, and each of these components may be equipped with its own dedicated metadata memory (MM). Specifically, the quantum computer includes a metadata memory configured to store information related to the internal qubit states, such as logical identifiers, register locations, error tracking data, and timestamps associated with computational operations.

Separately, the quantum memory is provided with its own metadata memory, which is configured to track information specific to the stored quantum states. This includes the logical identifier of each stored quantum state, the storage location within the quantum memory, and the timestamp indicating when the state was stored or updated.

By equipping both the quantum computer and the quantum memory with independent metadata memories, the system can maintain a clear separation of management and control between the quantum computing operations and the quantum storage operations within the same network node. This dual-metadata approach improves resource coordination, enables efficient synchronization of distributed quantum states, and facilitates robust error tracking and recovery across the quantum network. It also allows the quantum computer and quantum memory to operate semi-independently, while still sharing critical metadata as needed via the classical communication interface and the application management and control system.

The metadata memories are being configured to store information associated with quantum states stored in the quantum memory, wherein the information includes a logical identifier of the quantum state, the storage location within the quantum memory, a timestamp indicating the time of storage, and/or information about the entanglement partner.

The metadata memories provide a structured way to track and manage entangled quantum states within the quantum computing network node. By storing a logical identifier, each quantum state can be uniquely referenced, preventing mix-ups when multiple entangled pairs are stored simultaneously. The storage location ensures that the system can efficiently retrieve the correct quantum state from quantum memory when needed for quantum operations. The timestamp allows the system to prioritize the usage of quantum states based on their coherence time, minimizing quantum decoherence effects.

By integrating the metadata memory, the quantum computing network node improves operational reliability and scalability. It enables multi-state processing, ensures that the correct entangled quantum states are used in quantum communication, and reduces errors caused by incorrect state selection in complex quantum networks.

In an embodiment, the quantum computing network node is configured to synchronize operations with another quantum computing network node using a common timing signal, wherein the common timing signal is being derived from a network provider plane or generated independently within the application plane.

Synchronization between quantum computing network nodes ensures that quantum operations, such as entanglement measurements and quantum state corrections, occur in a coordinated manner. This prevents timing mismatches that could introduce errors in quantum state processing. The timing signal may be provided by an external quantum clock distribution system from the network provider plane or generated locally within the application plane using oscillators, phase-locked loop circuits, or stabilized laser sources. Using a common timing signal enhances the precision and reliability of quantum communication. It reduces phase drift and timing inconsistencies, ensuring that entangled quantum states are processed correctly. This is particularly important in distributed quantum computing and long-distance quantum networks, where maintaining coherence between remote quantum systems is critical.

In an embodiment, the quantum computing network node is configured to receive pre-distributed entangled quantum states from a quantum service provider and stores them in the quantum memory before execution of quantum state transfer operations.

The quantum computing network node is designed to operate with pre-distributed entanglement, meaning that entangled quantum states are provided in advance by a quantum service provider, in particular a telecommunication provider, rather than being generated in real time. These entangled states can be distributed using entangled photon sources and delivered via optical fibers or free-space optical links. Once received, they are stored in quantum memory devices, such as superconducting circuits, ion traps, or atomic ensembles, until they are needed for quantum communication or computation. By leveraging pre-distributed entanglement, the quantum computing network node reduces communication latency and avoids the complexities of real-time entanglement generation. This ensures that entanglement resources are readily available when needed, improving the efficiency, scalability, and practicality of quantum networks.

According to a fourth aspect of the invention, a quantum communication system is provided, wherein the quantum communication system comprises:
a) a first quantum computing network node A, deployed in an application plane, wherein the first quantum computing network node A comprises a quantum computer A, a quantum memory A, and a classical communication interface to a second quantum computing network node B;
b) the second quantum computing network node B, deployed in the application plane, wherein the second quantum computing network node B comprises a quantum computer B, a quantum memory B, and a classical communication interface to the first quantum computing network node A;
wherein the quantum communication system is configured to execute at least one, in particular all, of the steps of the method described above.

Even if the first option and the second option are alternatives, the quantum communication system can be configured to carry out both options, depending on the case that shall be used.

The quantum communication system comprises at least two quantum computing network nodes that interact to enable distributed quantum computing, where the EDaaS is used to provide entangled quantum states to be used for the quantum computations. The deployment of these nodes in the application plane ensures that the system can operate independently of real-time entanglement distribution from a network provider plane. The classical communication interfaces facilitate the exchange of measurement results required for quantum corrections. By integrating quantum computing network nodes in a structured system, the invention enables scalable, high-fidelity quantum communication without requiring direct quantum state transmission between nodes. The system allows for distributed quantum computing, secure quantum key distribution (QKD), and long-distance entanglement-based networking, making it adaptable to various quantum technologies. Furthermore, the method enables distributed, integrated quantum computing, which represents a very beneficial use case of the invention. Specifically, two quantum computers that are not integrated using the described method, each with N qubits, can only perform calculations within a computational space of 2 × 2^{N}. By contrast, when two quantum computers are integrated using the method described herein, they can perform calculations within a combined computational space of 2^{2N}, which represents an exponential gain in computational capacity.

In an embodiment, the quantum communication system comprises a network provider plane configured to distribute entangled quantum states to the first and second quantum computing network nodes.

The network provider plane acts as a centralized or distributed source of entangled quantum states, generating entangled photon pairs and distributing them to the quantum computing network nodes via optical fiber links or free-space optical communication channels. This allows the system to maintain a supply of entangled states for quantum communication, eliminating the need for local entanglement generation at the nodes. By incorporating a network provider plane for entanglement distribution, the system ensures scalability and efficient resource management in large-scale quantum networks. It reduces the complexity of real-time entanglement generation at individual nodes while maintaining high-fidelity entanglement for secure and reliable quantum communication.

In an embodiment, the quantum communication system comprises a control system configured to coordinate quantum operations, entanglement distribution, and timing synchronization between the first and second quantum computing network nodes, wherein the control system is implemented as a centralized or distributed system.

The control system ensures that all quantum operations, including quantum state transfer, entanglement swapping, and quantum corrections, are executed in a synchronized and optimized manner. It can be implemented as a centralized control unit that manages multiple quantum computing network nodes or as a distributed system, where each node independently executes control protocols based on shared synchronization signals. By integrating a control system, the quantum communication system achieves precise timing coordination, efficient entanglement distribution, and optimized quantum resource allocation, making it suitable for scalable quantum networks and distributed quantum computing applications.

### Figures

In the following, preferred implementation examples of the present invention are explained with reference to the accompanying figure:
- Fig. 1:: shows an shows an architecture of for Distributing Entangled States as a Service to clients;
- Fig. 2:: illustrates an embodiment of the invention showing an overall quantum communication system setup for implementing quantum teleportation;
- Fig. 3:: illustrates the teleportation protocol in terms of a qubit line diagram;
- Fig. 4:: illustrates an embodiment of the invention in which quantum entanglement swapping is used to establish entanglement between two quantum computers;
- Fig. 5:: illustrates the method according to the embodiment of Fig. 4 in detail;
- Fig. 6:: illustrates in entanglement swapping with pre-stored quantum states within the network provider plane;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

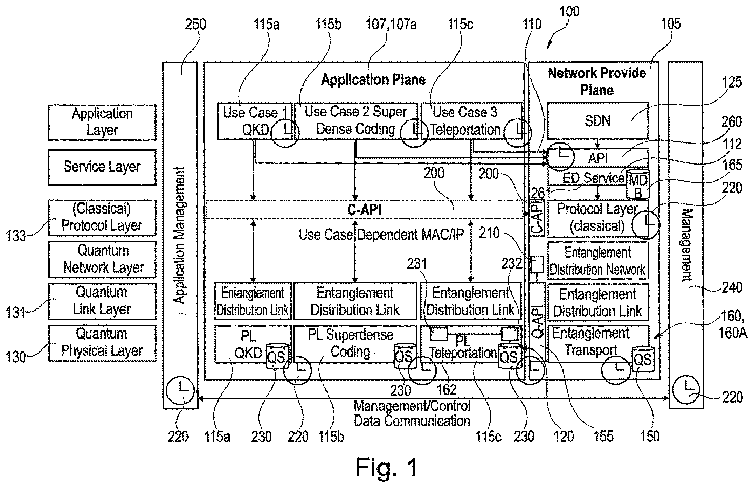

Fig. 1 describes an architecture of a 'System for Distributing Entangled States as a Service to clients' 100, in particular to at least one quantum computing network node.

Architectural elements of the system 100 can be set-up in a network provider plane 105, in particular a telecommunication provider management employment 105. User systems 107 or client systems 107 using quantum communication protocols such as quantum key distribution, super-dense coding, or teleportation can utilize entangled quantum states, in particular entangled photons to run their applications. For this purpose, the Entanglement Distribution Service (EDaaS) provides dedicated communication interfaces, e.g. implemented as APIs, that fulfill various services and enable communication.

At the service layer level, a communication interface 110 is provided through which quantum communication applications 115a,b,c can communicate with an Entanglement Distribution module 112 of the telecommunication provider 105 to obtain the logical and physical addresses of the stored quantum mechanical states within the environment of the telecommunication provider 105. The communication applications 115a,b,c can be a Quantum Algorithm 115.

The communication interface 110 also enables the triggering of one or more quantum mechanical states based on a physical storage address, which are then exported via a photon push-interface over a quantum channel 120 located at the level of the quantum physical layer.

The communication interface 110 can provide AAA functionality (authentication, authorization, and accounting for the application) to manage access to the EDaaS service. The communication interface 110 can also provide an interface for time synchronization of the client system 107 relative to the EDaaS service. Through this interface, users' clocks can be synchronized with the clocks of the distribution service, allowing the assignment of photons to specific time slots as will be described in more detail below.

According to Fig. 1, the Entanglement Distribution Service is managed across network nodes via a Software Defined Network 125 (SDN) or an Entanglement Distribution App. For this purpose, the SDN service configuration features monitoring means, alarming means, and means that ensure that every node provides sufficient entangled states.

A quantum physical layer 130 of the EDaaS service comprises quantum optical elements (photon sources, fibers, beam splitters, single-photon detectors, frequency converters, or quantum memories). A quantum link layer 131 comprises end-to-end quantum optical connections, through which entangled photonic states can be distributed between any nodes of the quantum network. A routing layer comprises optical components that enable dynamic changes of quantum links over various optical paths/links.

In the state-of-the-art, the application 115 of the client 107 can request an entangled quantum state that is stored in a quantum memory (QM) 150 at a network node 160 of the telecommunication provider. The entangled state is provided to the application 115 by means of a quantum mechanical API 155 (Q-API) at the level of the quantum physical layer 130 by the telecommunication provider 105. The deployment of the telecommunication provider 105 and also the client system 107 can be considered as being network nodes, particular the telecommunication provider 105 can comprise many network nodes. A network node serves as an interaction point within the network, facilitating the exchange of information between other network entities. A network node of the application 162 can comprise a client-controlled quantum memory 230, a processing unit 231 and/or a metadata memory 232.

However, due to flexibility and performance reasons it is desirable that the applications have or more direct access to the entangled quantum states.

Therefore, it is a new idea that applications 115 may control entangled photonic states at different network nodes themselves in order to facilitate the execution of quantum communication protocols in a more direct and flexible way. Therefore, the Entanglement Distribution as a Service (EDaaS) infrastructure must be extended with capabilities that allow the distribution of entangled quantum states to quantum storage devices located at an application plane 102.

To fulfill these tasks, the EDaaS infrastructure is extended with further capabilities. Due to these changes, the client system 107 then becomes a User-Controlled Quantum Memory System 107a:
First, the Classical High-Level API 200 of the EDaaS service is extended to allow client applications 115 to request the distribution of entangled photonic states to a quantum storage device located at the application's premise. Since network providers typically do not permit client applications to directly access their quantum or classical storage systems, this service is implemented as a separate component in the proposed architecture. This separation ensures that the client-controlled quantum memory system operates independently while still interacting with the EDaaS infrastructure for entanglement distribution requests and while also ensuring "protection" for the quantum storage systems of the telecommunication provider 105 because direct access is not being allowed for the client applications 115.

Second, a classical protocol layer 133 is introduced into the EDaaS architecture to manage the communication between quantum applications 115 and the EDaaS infrastructure. This protocol layer ensures a structured and reliable exchange of control commands, metadata, and entanglement requests, enabling efficient interaction between client-side quantum systems and the provider-side quantum network nodes. The protocol layer will manage the quantum links between the communication parties.

Third, the Quantum API 155 of the EDaaS infrastructure is extended to Q-OSI layer 2 - which means up to the quantum link layer 131 - to handle and process incoming quantum states.

Fourth, the EDaaS infrastructure is enhanced with a capability to store incoming photonic states and/or conduct Bell State Measurements (BSM). For this reason a Bell State Measurement-module 210 is being deployed at the quantum service provider 105. This capability enables entanglement swapping operations, allowing entanglement swapping from the EDaaS infrastructure to quantum memory devices located at the application's premise.

Fifth, a quantum memory 230 is provided at each quantum application 115 at the quantum physical layer. Those quantum memories 230 can be called client-controlled quantum memory 230.

A time synchronization capability is explicitly shown by clock symbols located at the respective network entities. Timing-synchronization-modules 220 can be deployed at the application management, the applications 115, at to the entanglement transport layer, at the management system and at the EDaaS service.

A network provider management system 240 controls the devices deployed at the network provider plane, whereas an application management & control system 250 controls the devices deployed at the application plane 102. Both management systems can control the time synchronization process and communicate control data.

The entanglement distribution service (EDaaS) of the network provider is configured to successfully distribute and store entangled photonic states across the communication network, ensuring that, in principle, every network node shares and maintains entangled quantum states with any other network node.

To enable the use of entangled quantum states for quantum communication protocols, which are logically managed by the application provider, the application provider must be granted access to the entanglement resource. This access allows the application provider to utilize the entangled photonic states distributed by the EDaaS infrastructure to execute quantum networking operations, such as quantum key distribution (QKD), super-dense coding, or teleportation-based communication.

The Entanglement Distribution (ED) Service API 260 allows the application provider to request entangled photonic states via the Service Layer 261 with any peer network node.

A typical request comprises the name and/or ID of the peer network node 160, identifying the network node 160 with which the application provider intends to establish entanglement-based communication.

Upon receiving the request, the ED Service commits the request and forwards it to the protocol layer for further execution. The protocol layer then initiates a communication session between the requesting application and the network provider, assigning a unique classical session ID to the session. This session ID is communicated to both the application provider and the telecommunication network provider, enabling them to track and manage the entanglement request throughout the process.

### Protocol Layer 133:

At the protocol layer 133, several essential steps are executed to facilitate entanglement distribution between the quantum service provider and the client application. First, a quantum link is negotiated between the telecommunication network provider 105 and the application 115. The quantum link is defined by its physical transmission medium, such as a fiber channel, and/or by the photon frequency used for quantum state transfer. Next, a time bin is negotiated between the telecommunication provider 105 and the application 115. Since the successful transmission of quantum states cannot be guaranteed due to decoherence or fiber attenuation, and because quantum states cannot be measured without destruction, only a start time bin and a repetition frequency are negotiated. This ensures that photons are transmitted within pre-defined time slots. The protocol layer 133 ensures that this synchronization occurs at both the source node and the destination node simultaneously.

### Protocol Execution at the Start Time:

At the negotiated start time, the protocol layer executes the following steps:
1. Querying and Reserving Entangled Photon States: The protocol layer uses a classical metadata memory 165 of the telecommunication provider 105 to query and reserve entangled photon states. The quantum states that will be swapped to a client-controlled quantum memory system are marked as "used" in the metadata memory 165, ensuring that they are never reused.
2. Communication between network nodes of the telecommunication provider 105: The protocol layer implemented at a first network node A 160,160A of the telecommunication provider 105 and second network node B of the telecommunication provider 105 is used for the communication to ensure proper extraction of entangled photon pairs from the provider's 105 infrastructure, wherein the protocol layer at the first network node A 160,160A communicates the logical photon IDs (ID:QSPs) of reserved photons to the second network node allowing the correlated entangled photons to be selected accordingly in the respective quantum memory 150a,150b.
3. Opening a Quantum Link: On Quantum Network Layer 2 131 (Quantum Link Layer 131), the telecommunication provider 105 and the client application 115 establish a quantum link at the requested start time, wherein the quantum link (a passive optical connection) is used to transmit photons. The entanglement distribution process between the network nodes 160A,160B and the client application 115 is initiated.

At the first time bin, the client application 115 sends a photon (atom-photon entanglement) to the provider's Quantum API 155 (Q-API). The Q-API 155 forwards and stores the received photon in the provider's quantum memory.

At a later time bin, a zeroth Bell State Measurement (BSM) by using the Bell State Measurement-module 210 is conducted on the atoms storing the entangled photons. The quantum memories store photons, where one photon is entangled with the client application and the other with the network node. The zeroth BSM is performed on the atoms storing these photons. Alternatively, the quantum memories emit the stored photons, one entangled with the application and the other with the peer network node, and an zeroth optical Bell State Measurement is conducted. The exact BSM procedure is known to the person skilled in the art. The Bell State Measurement-module 210 is technically implemented as part of the Q-API 155 architecture building block.

4. Processing Measurement Results and Managing Entanglement: The results of the zeroth Bell State Measurements are sent via the classical protocol layer 133 via the Classical High-Level API using classical messages tagged with the session ID. If the entanglement swap is successful (projection into a Bell State), the photons are marked as entangled at the application level. If the swap fails (no projection into a Bell State), the quantum memory storing the involved atoms can be reinitialized and overwritten for subsequent use.

As a result, the entanglement previously shared between a first quantum stored at the first network node of the telecommunication provider 160A and a second quantum state stored at the second network node of the telecommunication provider 160B is now transferred to applications A and B, enabling direct quantum communication between them.

Repetition of the Process: The process is repeated according to the negotiated repetition rate, with photons transmitted within predefined time bins. The session remains open on the protocol layer as long as required. Typically, the client application closes the session once a sufficient number of redundant photon pairs have been successfully swapped. However, due to short coherence times, certain client applications may require permanent quantum links to maintain continuous entanglement.

The process can be executed in parallel at other network nodes within the decoherence time of the entangled photon states. This results in a final configuration where entangled photonic states are established in one or two Client-Controlled Quantum Memory Systems 107a. In principle, it is possible that one Client-Controlled Quantum Memory System 107a stores the entangled quantum states in one or two respective quantum memories. However, it is also possible that first Client-Controlled Quantum Memory System 107 stores one quantum state and its quantum memory and that a second Client-Controlled Quantum Memory System 107a source the entangled quantum state in its quantum memory. Nevertheless, in all of these variations, the application 115 has direct access to the entangled quantum states.

The present invention integrates entangled photonic quantum states stored in local quantum memory devices within the application plane 102 to enable the execution of quantum communication protocols. A fundamental assumption is that the network provider plane 105 offers an entanglement distribution service (EDaaS), which successfully distributes and stores entangled photonic states across the provider's communication network. As a result, in principle, any quantum computing network node 202A, 202B within the network can share and persist entangled quantum states with any other network node. Furthermore, entanglement may be extended to quantum memory devices 230A, 230B located on the application plane 102, allowing the execution of quantum communication protocols to be independent of real-time interaction with the network provider plane 105.

A preferred quantum communication approach involves the direct interaction of entangled quantum states stored in quantum memories 230A, 230B. The quantum memories 230A, 230B can also be named quantum memory devices 230A, 230B. In particular, the invention assumes the presence of two quantum memories 230A, 230B implemented in the application plane 102 at two distant quantum computing network nodes 202A, 202B, where they store and persist entangled quantum states for later use in quantum operations.

In a described system 200, client applications interact using only a classical communication interface 206. The communication between distant quantum applications 115 is assumed to occur via a teleportation protocol, where quantum information is transferred between nodes without direct quantum state transmission, relying instead on shared entanglement and classical post-processing.

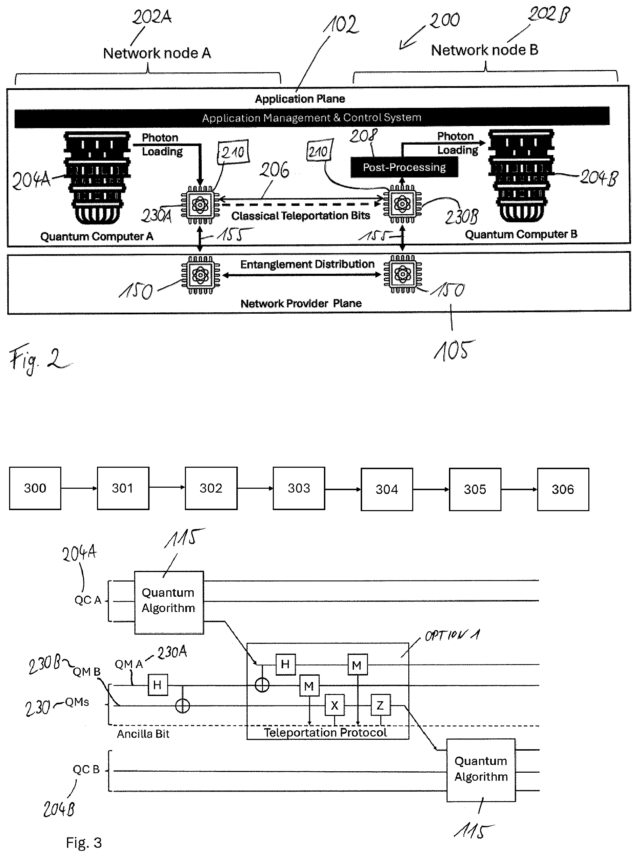

Fig. 2 illustrates an embodiment of the invention showing an overall quantum communication system 200 setup for implementing quantum teleportation using quantum memory devices 230A, 230B within the application plane 102. The system comprises of two quantum computing network nodes 202A and 202B, each comprising a quantum computer 204A, 204B and a quantum memory 230A, 230B associated to each quantum computer 204A, 204B, respectively. These network nodes 202A, 202B are connected via a classical communication link 206, which enables the transmission of classical measurement results necessary for the teleportation protocol. The quantum computing network nodes 202A and 202B each comprise a classical communication interface 206 to The network provider plane 105 did provide entanglement distribution to the quantum memory devices 230A, 230B to ensure the availability of pre-shared entangled quantum states. Fig. 2 also shows at least one Bell State measurement module 210 that can conduct the Bell State measurement.

In the illustrated embodiment, the quantum computer A (QC A) 204A at network node A 202A intends to transfer a quantum state to quantum computer B (QC B) 204B at network node B. However, due to physical distance or signal loss in optical fibers, a direct quantum connection between the two quantum computers is infeasible or at least difficult. To overcome this limitation, a teleportation protocol using pre-distributed entangled quantum states stored in quantum memory devices 230A and 230B is employed.

The teleportation process comprises of the following steps:
- Photon Loading at Quantum Memory A 230A: QC A 204A injects a photon into quantum memory A 230A, where it is persisted; The photon is entangled with a local qubit inside QC A 204A to ensure coherence with quantum computations.
- Bell State Measurement (BSM) at Quantum Memory A 230A: A Bell State Measurement (BSM) is performed using the injected photon and one of the photons from an entangled photon pair pre-shared between network node A 202A and network node B 202B. Alternatively, if atoms store the quantum states, a BSM can be performed between the atom storing the injected photon and an atom storing one photon of the entangled pair. The measurement collapses the quantum state and generates classical measurement results.
- Transmission of Classical Measurement Results: The measurement results are transmitted via the classical communication link 206 to Quantum Memory B 230B at network node B.
- Post-Processing and Quantum State Reconstruction at Quantum Memory B (230B): Quantum Memory B receives the classical measurement results and performs a post-processing step depending on the BSM outcome using a post-processing module 208 on a photon B quantum memory B 230B emits. This step can use a linear quantum operation (Pauli-X or Pauli-Z gate or both or none).
- Photon Loading into Quantum Computer B (204B): After post-processing, Quantum Memory B 230B the photon B is then loaded into Quantum Computer B 204B for further quantum computation.

At this stage, QC B 204B holds an exact replica of the quantum state of QC A 204A.

The network provider plane 105 continuously distributes entangled photon pairs to the quantum memory devices 230A, 230B via an entanglement distribution system. However, the actual teleportation process at the application plane 102 is independent of real-time entanglement distribution from the provider, allowing efficient quantum state transfer with low latency. The application management & control system 250 at the application plane 102 ensures synchronization and operational coordination. Hence, having both network nodes within a common application management & control system 250 is beneficial.

This embodiment enables efficient quantum state teleportation using local quantum memory devices at the application plane, providing low-latency quantum communication while abstracting the network provider plane's entanglement distribution process.

Figure 3 illustrates the process of quantum teleportation between QC A 204A and QC B 204B, using quantum memories 230A, 230B that store a pre-distributed entangled qubit pair. Instead of directly transmitting a qubit from QC A to QC B, the system leverages quantum entanglement and classical communication to reconstruct the original quantum state at the destination.

The teleportation protocol begins with QC A 204A generating a quantum state. This quantum state, in particular a qubit, is stored in QM A 230A and entangled with the qubit within QC A 204A, where it undergoes a Bell State Measurement (BSM) using one half of the entangled qubit pair. The result of this measurement is then sent as classical information (ancilla bits) to QM B 230B via the classical communication link 206. Based on these classical bits, QM B applies, if necessary, the appropriate quantum corrections (Pauli-X or Pauli-Z gates or both or none) to recover the original qubit state. Finally, the reconstructed qubit is transferred to QC B by means of photon loading, completing the teleportation process.

By utilizing pre-established quantum entanglement and classical communication, this method enables long-distance quantum state transfer without the need for a direct quantum channel. The process plays an important role in distributed quantum computing and quantum communication networks, ensuring that quantum information can be securely and efficiently transferred between distant nodes.

### Step 300: Providing the Following Set-Up

Before the teleportation process begins, the quantum communication system 200 is set up to ensure that QC A 204A and QC B 204B can communicate. The two quantum memories, QM A 230A and QM B 230B, are pre-distributed with an entangled qubit pair via the quantum network. This entanglement serves as the quantum resource that allows teleportation to take place. Additionally, the classical communication channel 206 is established between the two quantum memories 230A,B to transmit measurement results during the teleportation process.

### Step 301: Generating and Storing the Qubit at QC A 204A

QC A 204A first generates a qubit that needs to be teleported to QC B 204B. Since direct quantum transmission over long distances is infeasible due to photon loss in optical fibers, the qubit is instead stored in QM A 230A for teleportation.

### Step 302: Use Entanglement Between QM A 230A and QM B 230B

To enable quantum teleportation, QM A 230A and QM B 230B must already share an entangled qubit pair. The Hadamard gate (H) + CNOT has generated an entanglement between a qubit of the QV 204A and a qubit of the QM 230A.

### Step 303: Performing the Bell State Measurement (BSM) at QM A

A Bell State Measurement (BSM) is now performed on QM A between the quantum state of the initially entangled quantum state pair stored in quantum memory A and the quantum state injected from quantum computer A. This step destroys the original qubit that was stored in QM A 230A, but in doing so, it produces at least one classical, in particular two, measurement result. These results are stored as ancilla bits and are transmitted to QM B 230B via the classical communication channel 206.

### Step 304: Transmitting Classical Measurement Results

Since quantum teleportation does not violate the laws of physics, it does not allow for instantaneous communication. Instead, after the BSM at QM A 230A, the classical measurement results must be sent to QM B 230B through the standard classical channel 206, such as an optical fiber or a radio link or any other network connection.

### Step 305: Correcting the Qubit at QM B

Once QM B 230B receives the classical measurement results, it can apply quantum corrections to recover the original state as preset by QC A 204A. This correction process involves applying Pauli-X and/or Pauli-Z gates (or both or none) depending on the received measurement outcomes. If BSM is positive no corrections need to be applied. If the classical results indicate certain values, QM B will adjust its quantum state accordingly, ensuring that the teleported qubit is restored exactly as it was in QC A.

### Step 306: Transferring the Restored Qubit to QC B 204B

After the correction process is complete, the now-restored qubit in QM B 230B is transferred to QC B 204B by means of photon loading. At this point, QC B 204B has the exact same quantum state that was originally in QC A 204A, successfully completing the teleportation process. The metadata memories (MM) are involved in the selection of the entangled photons to be used for the entanglement swapping process. Furthermore, the metadata memories are also involved in updating the status of the selected photons by marking them as "used" or deleting their metadata entry, thereby ensuring that each entangled photon pair is selected only once and preventing unintended reuse in subsequent operations.

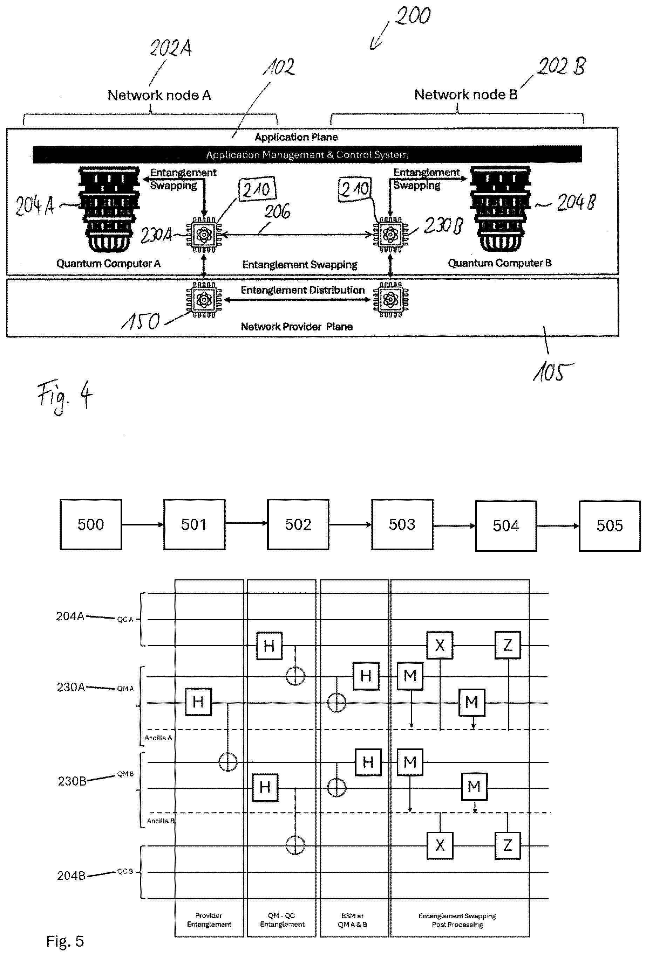

Figure 4 illustrates an embodiment of the invention in which quantum entanglement swapping is used to establish entanglement between the two quantum computers 204A and 204B via the respective quantum memories 230A, 230B located at the application plane 102. The system comprises two quantum computing network nodes 202A 202B, each comprising a quantum computer 204A, 204B and a quantum memory 230A, 230B, respectively. These network nodes are connected via the classical communication interface 206, which enables the transmission of classical measurement results necessary for completing the entanglement swapping process. Fig. 4 also shows two Bell State measurement modules 210 associated to the respective quantum memories to conduct entanglement measurement, in particular the Bell State measurement.

The network provider plane 105 provides entanglement distribution via an entanglement distribution system, ensuring that entangled photon pairs are pre-distributed between the quantum memory devices 230A,230B.

In this embodiment, the QC A 204A and the QC B 204B do not share a direct entangled state initially. Instead, their respective quantum memories 230A, 230B each hold a separate entangled photon pair that has been provided by the network provider plane 105. Through a Bell State Measurement (BSM) process, the entanglement is transferred from the quantum memories to the quantum computers, resulting in QC A 204A and QC B 204B sharing an entangled qubit pair that can be used for distributed quantum computation.

The entanglement swapping process comprises of the following steps:
1. Provider Entanglement Distribution: The network provider plane 105 continuously distributes entangled photon pairs to the quantum memory devices 230A, 230B via the entanglement distribution system at a given rate. These entangled states remain stored in the quantum memory devices 230A, 230B until they are needed for quantum operations of the quantum applications 115.
2. Quantum Memory to Quantum Computer Entanglement: Each quantum QC loads of photon that is entangled with one of its qubits into its associated quantum memory.
3. Bell State Measurement at Quantum Memories: A first BSM is performed at Quantum Memory A 230A and a second BSM is performed on Quantum Memory B 230B between the loaded photon and the photon of the initially entangled pair that was distributed by the provider, effectively destroying the original entanglement between the quantum memories.
4. Transmission of Classical Measurement Results: The classical measurement results from the BSM are sent to Quantum Computer B 204B via the classical communication interface 206. These classical bits are transmitted through standard classical communication link 206.
5. Post-Processing and Quantum State Correction at QC A 204A and/or QC B 204B: QC A 204A and QC B 204B receive the classical measurement result and applies the necessary quantum corrections to entangled qubit so that it becomes entangled. This correction step ensures that the entanglement between QC A and QC B is in the correct form for use in quantum computations. The quantum computers must also evaluate whether both entanglement swaps have been successfully completed. If both swaps are successful, the distributed quantum algorithm can proceed. However, if only one or neither of the swaps succeeds, the quantum algorithm is aborted and restarted. This status information, including the success or failure of the swapping operations, can be stored and managed within the metadata memories (MM) of the quantum computers and/or quantum memories. By persisting this status in the MM, the quantum computers are able to consistently reference and utilize this information for coordinating subsequent algorithm executions, error handling, and resource management, in line with the metadata functionalities described in earlier sections.

At the end of this process, QC A 204A and QC B 204B now share an entangled qubit pair, despite never having been directly entangled before. This technique enables distributed quantum computing, where quantum computers located at different network nodes can perform joint computations using shared entanglement.

The application management & control system at the application plane 102 ensures synchronization and operational coordination throughout the entanglement swapping process.

Fig. 5 illustrates an entanglement swapping process that was described as the second option, in which a quantum state of an initially entangled photon pair, previously distributed by the network provider plane 105 to the quantum memories QM A 230A and QM B 230B, is swapped into the quantum computers QC A 204A and QC B 204B, thereby enabling the quantum computers to share an entangled qubit pair for distributed quantum computation. The process shown in Figure 5 comprises five sequential steps, labeled as 500 to 505.

In step 500, referred to as "Provider Entanglement," the quantum network provider distributes an entangled photon pair between the quantum memory QM A 230A located at network node A 202A and the quantum memory QM B 230B located at network node B 202B. At this stage, the quantum computers QC A (204A) and QC B (204B) are not yet involved in the entanglement process, and the entanglement is exclusively established between the quantum memories.

In step 501, referred to as "QM-QC Entanglement," local entanglement is established between each quantum memory and its associated quantum computer. The combination of a Hadamard (H) gate and a Controlled-NOT (CNOT) gate formally describes the process of entangling two qubits. Accordingly, step 501 corresponds to the actual provider entanglement. In contrast, step 500 merely represents a preparation phase, such as resource provisioning carried out by the control system, which ensures that the necessary entangled photon pairs are available for the subsequent entanglement operations. At network node A 202A, the quantum computer QC A 204A prepares a qubit in a superposition state by applying a Hadamard (H) gate, followed by the application of a Controlled-NOT (CNOT) gate between QC A 204A and QM A (230A), resulting in an entanglement between QC A and QM A. Simultaneously, at network node B 202B, a Hadamard (H) gate is applied to the qubit stored in QM B 230B to prepare it for entanglement, followed by the application of a Controlled-NOT (CNOT) gate between QM B 230B and QC B 204B, thereby entangling the two respective qubits. At the conclusion of this step, QM A and QM B still hold the initial entangled photon pair distributed by the network provider, but now each quantum memory is also entangled with its corresponding quantum computer.

In step 502, referred to as "BSM at QM A and QM B," a Bell State Measurement (BSM) is performed separately at both quantum memories between the qubit having the quantum state of the initial entangled photon pair and the respective qubit that is entangled with the qubit of QC A and QC B, respectively. Each Bell State Measurement generates classical bits representing the measurement result, referred to as Ancilla A and Ancilla B, respectively.

In step 503, these classical measurement results of BSM at QM A are transmitted via the classical communication links 206 to QC A, whereas the classical measurement result of BSM at QM B is transmitted via the classical communication links 206 to QC B.

In step 504, referred to as "Entanglement Swapping Post-Processing," the quantum computers QC A 204A and QC B 204B process the classical measurement results received from QM A 230A and QM B 230B, respectively. Depending on the combination of the measurement results received, quantum corrections are applied by the quantum computers to their respective qubits in order to assure, that the states at QCA and QCB are one of the four (well defined) Bell states. These quantum corrections are only applied if If the measurement results "M" indicate values other than "0", specific quantum corrections are applied to the qubits of quantum computer A (204A) and quantum computer B (204B). In particular, if the measurement result corresponds to "1", a Pauli-X, Pauli-Z, or a combination of Pauli-X and Pauli-Z gate operations (X, Z, or XZ) is applied to the respective qubits. These corrections ensure that the final quantum state of the qubits in QC A (204A) and QC B (204B) corresponds precisely to one of the four well-defined Bell states. As a result, undesired effects such as mixed states, additional phase shifts, or undefined superpositions are effectively prevented, thereby guaranteeing a correct and usable entangled state;; that is, if the Bell State Measurement is not positive or does not correspond to the initially distributed quantum state. The correction is performed by the application of Pauli-X and/or Pauli-Z gates as required, ensuring that the qubit state gets the correct quantum state needed to finalize the entanglement swapping process. Quantum corrections may need to be applied at both quantum computers QC A 204A and QC B 204B, depending on the specific combination of measurement results obtained at QM A 230A and QM B 230B.

In step 505, referred to as "Completion of Entanglement Swapping" the entanglement initially distributed between QM A 230A and QM B 230B is successfully transferred to QC A 204A and QC B 204B. As a result, the two quantum computers now share a correctly prepared entangled qubit pair, which can directly be consumed by their quantum computing algorithms. This enables the quantum computers to execute distributed quantum algorithms across different network nodes, as if they were locally connected, without the need for direct entanglement generation between them.

Since quantum measurements introduce randomness, the Bell State Measurement on QM A 230A and QM B 230B collapses the entangled state into one of four possible Bell states. Depending on the measurement outcome, QC B 204B must apply a correction operation to ensure that the final entanglement between QC A 204A and QC B 204B is correct.

The correction depends on the two classical bits received from the Bell State Measurement:

| BSM Result (Classical Bits) | Correction Applied to QC B's Qubit |
|---|---|
| 00 | No correction needed (identity operation) |
| 01 | Apply Z gate (phase shift correction) |
| 10 | Apply X gate (bit flip correction) |
| 11 | Apply X and Z gates (bit flip + phase shift correction) |

- The Pauli-X (X) gate flips the qubit state, changing 10) to 11) and vice versa.
- The Pauli-Z (Z) gate applies a phase shift, adjusting the relative phase of the quantum state.

After applying the appropriate correction, QC A and QC B now share one of the four well-defined bell states , completing the entanglement swapping process.

The two quantum computers are now logically coupled, allowing them to execute distributed quantum algorithms that rely on shared entanglement. This process can be scaled up to multiple qubits, enabling quantum networks where multiple quantum computers are connected through distributed entanglement.

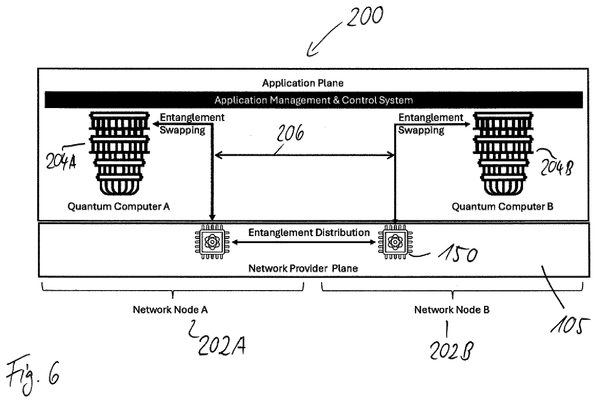

Figure 6 illustrates an entanglement swapping process using pre-stored quantum states within the network provider plane 105. Fig. 6 shows the quantum communication system 200, comprising two network nodes 202A and 202B, each containing a quantum computer 204A and 204B, respectively.

The network provider plane 105 continuously distributes entangled quantum states via entanglement distribution systems 150, ensuring that each quantum memory at network nodes 202A and 202B is supplied with entangled qubits. These pre-stored entangled states are then used for entanglement swapping at the application plane 102, where quantum computers 204A and 204B establish a direct entangled state without requiring real-time entanglement distribution.

A classical communication interface 206 transmits measurement results between network nodes 202A and 202B, ensuring that the quantum state corrections required for the entanglement swapping process are applied correctly. This enables distributed quantum computation between the quantum computers 204A and 204B, without the need for direct quantum communication between them.

The process according to Fig. 6 is in principle the same as shown in Fig. 5 with the difference that the quantum memories of the network nodes in the application plane are replaced by the quantum memories 150 located within the network provider plane 105.

Precise timing synchronization and the distribution of application management control systems across all relevant network nodes is important for the effective operation of the entanglement-based communication system. The application management systems is configured to provide the following functions:
- Providing a master timing signal to the application systems in cases where the network provider's timing signal is not utilized.
- Controlling the physical, link, and protocol layer systems for entanglement distribution, ensuring the continuous replenishment of entangled states at the application plane 102, specifically:
   ∘ Physical layer: Managing the transmission of photonic quantum states along an optical fiber at a specific frequency.
   ∘ Link layer: Handling the loading of application photons into quantum memory devices 230A, 230B, executing BSM, and performing optical post-processing at the receiving node.
   ∘ Protocol layer: Controlling the overall entanglement distribution process and ensuring communication between the application management & control system 250 and the network provider systems.

### Integration into the Application Management System

The application management system 250 requires dedicated control and management channels to application systems deployed at all network nodes. These channels are responsible for:
- Controlling quantum devices, including quantum memories 230A, 230B, Bell State Measurement modules 210, and timing & synchronization components.
- Maintaining classical network connections between application systems at different network nodes. This encompasses classical physical layer, classical link layer, classical network layer, and classical protocol layers. The classical network connection is crucial for transmitting Bell State Measurement (BSM) results to the corresponding network node.
- Ensuring timing and synchronization of operations, which can either be derived from the network provider's Entanglement Distribution as a Service (EDaaS) infrastructure or established via a management/control data communication link.

A novel aspect of the invention is the integration of quantum communication technologies into telecommunications operator networks. These networks provide customers with abstract interfaces that facilitate access to quantum communication services. By centralizing the role of network operators in the management of quantum memories, the invention establishes a flexible and accessible telecommunications service for executing quantum communication protocols. This approach lays the foundation for seamlessly incorporating quantum technologies into existing communication infrastructures and supports future advancements in distributed quantum computing and networking.

### Advantages of the Invention

The photon loading protocol offers a significant advantage by allowing applications to directly work with stored quantum states in a quantum memory 230A, 230B. This eliminates the need for separate handling of quantum states, ensuring the convergence of atomic and photonic quantum states into a unified framework.

Additionally, the ability to swap an entangled quantum state directly into a quantum computer 204A, 204B enables the seamless integration of two quantum computers at different network nodes. By establishing correlated qubits shared between two quantum computers, quantum algorithms executed at both locations can process entangled states without requiring real-time quantum state distribution. This results in enhanced efficiency and scalability for distributed quantum computing applications.

### Reference numbers list

- 102: application plane
- 105: network provider plane
- 107: user systems
- 107a: User-Controlled Quantum Memory System
- 110: communication interface
- 115: quantum application
- 200: quantum communication system
- 202A,B: quantum computing network node
- 204A,B: quantum computer
- 206: classical communication interface
- 208: post-processing module
- 210: Bell State measurement module
- 230A,B: quantum memory
- 250: application management & control system

## Claims

1. A method for transferring quantum information between a quantum computer A (204A) and a quantum computer B (204B), the method comprising the following steps:
a) Providing a quantum computing network node A (202A) at a first network location, the quantum computing network node A (202A) having a quantum computer A (204A) on which a quantum application is running and a quantum memory A (230A);
b) Providing a quantum computing network node B (202B) at a second network location, the quantum computing network node B (202B) having a quantum computer B (204B) on which the quantum application is running and a quantum memory B (230B);
c) Providing an initially entangled quantum state pair, wherein a first quantum state of the initially entangled quantum state pair is stored in the quantum memory A (230A) and a second quantum state of the initially entangled quantum state pair is stored in the quantum memory B (230B);
d) Performing an entanglement measurement at the quantum memory A (230A) on the first quantum state of the initially entangled quantum state pair stored in the quantum memory A (230A), generating a classical measurement result;
e) Providing the classical measurement result from the quantum computing network node A (202A) to the quantum computing network node B (202B) via a first classical communication link (206) as a first option or providing the classical measurement result from the quantum computing network node A (202A) to the quantum computer A (204A) via a second classical communication link (206) as a second option;
f) Loading the second quantum state of the initially entangled quantum state pair from the quantum memory B (230B) to the quantum computer B (204B) as the first option or swapping the quantum state of a qubit stored to a quantum computer A (204B) by post-processing means of the quantum computer A (204A) as the second option;
g) Applying a quantum correction by post-processing means by the quantum memory B (230B) to the second quantum state of the initially entangled quantum state pair stored in the quantum memory B (230B) as the first option or applying the quantum correction on the qubit within quantum computer A (204A) and/or quantum computer B (204B) by post-processing means of the quantum computer A (204) and/or quantum computer B (204B) as the second option, wherein in each case the quantum correction is performed depending on the at least one classical measurement result, in particular by using at least one quantum gate operation, wherein the quantum correction transforms the second quantum state in the first option or the qubit in the second option into a final entangled quantum state shared between the quantum computer A (204A) and quantum computer B (204B).

2. The method of claim 1, wherein the initially entangled quantum state pair is pre-distributed from a network provider plane (105) by a quantum service provider to the quantum computing network node A (202A) and the quantum computing network node B (202B) and wherein the initially entangled quantum state is then stored in the corresponding quantum memory A (230A) and the corresponding quantum memory B (230B), respectively.

3. The method of any of the preceding claims, wherein:
• in the first option called "Quantum State Loading" the following steps are performed:
∘ Loading a photon from the quantum computer A (204A) into the quantum memory A (230A), wherein the photon is entangled with a qubit of the quantum computer A (204A);
∘ Performing the entanglement measurement, in particular at the quantum memory A (230A), between the first quantum state and the quantum state of the loaded photon;
∘ Extracting the final quantum state from the quantum memory B (230B);
∘ Injecting the final quantum state into the quantum computer B (204B), such that the final quantum state is available for quantum computation at the quantum computer B (204B); or
• in the second option called "Entanglement Swapping" the following steps are performed:
∘ Loading a first photon from the quantum computer A (204A) into the quantum memory A (230A), wherein the first photon is entangled with the qubit of the quantum computer A (204A) and loading a second photon from the quantum computer B (204B) into the quantum memory B (230B), wherein the second photon is entangled with a qubit of the quantum computer B (204B);
∘ Performing the entanglement measurement, in particular at the quantum memory A (230A), between the first quantum state of the initially distributed photons and the quantum state of the first loaded photon and performing a further entanglement measurement, in particular at the quantum memory B (230B), between the first quantum state and the quantum state of the second loaded photon to obtain a further entanglement measurement result;
∘ Providing the further entanglement measurement result via a third classical communication link (206) to the quantum computer B (204B);
∘ Applying the quantum correction on the qubit within quantum computer B (204B) by post-processing means of the quantum computer B (204B), in particular by using at least one quantum gate operation, wherein the quantum correction transforms the qubit into the final entangled quantum state shared between the quantum computer A (204A) and quantum computer B (204B).

4. The method of any of the preceding claims, wherein the quantum corrections applied in step g) are determined based on the classical measurement results of one or more entanglement measurement such that:
• in the first option called "Quantum State Loading": The classical measurement result of the entanglement measurement performed at the quantum memory A (230A) determines whether a quantum correction is applied in a way that:
∘ If the classical measurement indicates the shared entangled quantum state to be identical to the original entangled state, then no correction is applied,
∘ If the classical measurement indicated a difference between the shared entangled state and the original entangled state, then, then, a Pauli-X (bit flip) and/or Pauli-Z (phase flip) gate is applied to the second quantum state of the initially entangled quantum state pair in the quantum memory B (230B) before injecting it into the quantum computer B (204B); or
• in the second option called "Entanglement Swapping": The classical measurement results of both the entanglement measurement performed at the quantum memory A (230A) and the Bell State Measurement performed at the quantum memory B (230B) determine whether a quantum correction is applied in a way that:
∘ If the classical measurement results indicate the same Bell state between quantum computer A (204A) and quantum computer B (204B) then then no quantum correction is applied,
∘ Otherwise the qubits at quantum computer A (204A) and quantum computer B (204B) are manipulated so that the original Bell States is reconstructed using the quantum gates.

5. The method of any of the preceding claims, wherein the quantum computing network node A (202A) and the quantum computing network node B (202B) are both deployed in an application plane (102), such that the quantum memory A (230A) and the quantum memory B (230B) store entangled quantum states independent of real-time quantum state distribution from a network provider plane (105), in particular the classical communication link (206) is also deployed in the application plane (102).

6. The method of any of the preceding claims, wherein the quantum computing network node A (202A) and the quantum computing network node B (202B) use a common timing signal for synchronization of the process, the common timing signal being derived from a network provider plane (105) or generated independently within an application plane (102).

7. The method of claim 1, wherein each quantum computing network node (202A, 202B) comprises a metadata memory, the metadata memory storing:
• a logical ID of the quantum state stored in the quantum memory (230A, 230B),
• a storage location of the quantum state within the quantum memory (230A, 230B), or
• a timestamp indicating a time at which the quantum state was stored,
wherein the logical ID of the quantum state is extracted from the metadata memory and shared over the classical communication link (206) with the other quantum computing network node (202A, 202B), such that each quantum computing network node (202A, 202B) identifies the quantum states that originally formed the initially entangled quantum state pair.

8. A quantum computer (204A, 204B) configured to execute quantum operations, comprising:
a) a classical communication interface (206);
b) a first quantum memory interface configured to load photons into a quantum memory (230A, 230B), wherein the photons are entangled with a qubit of the quantum computer (204A, 204B), and/or a second quantum memory interface configured to receive a photon from a quantum memory (230A, 230B);
c) a metadata memory configured to store information associated with quantum states, including a logical identifier of a quantum state, the storage location within the quantum memory, and a timestamp indicating the time of storage; and/or
d) post-processing means configured to apply quantum corrections to at least one of its qubits, in particular by using at least one quantum gate operation, based on classical measurement results received via the classical communication interface (206), wherein the quantum corrections transform the at least one qubit into a final entangled quantum state shared between the quantum computer (204A) and another quantum computer (204B).

9. A quantum computing network node (202A, 202B), the quantum computing network node (202A, 202B) being deployed in an application plane (102) and comprising:
a) a quantum computer (204A, 204B) of claim 8;
b) a quantum memory (230A, 230B) associated with the quantum computer (204A, 204B), the quantum memory (230A, 230B) being configured to store quantum states;
c) a classical communication interface (206) configured to transmit and/or receive classical measurement results over a classical communication link (206);
d) wherein the quantum computing network node (202A, 202B) is configured to perform:
i) performing an entanglement measurement on a quantum states stored in the quantum memory (230A, 230B), and transmitting a classical measurement result via the classical communication interface (206);
and/or
ii) applying a quantum correction to a quantum state stored in the quantum memory (230A, 230B) based on a received classical measurement result.

10. The quantum computing network node (202A, 202B) of claim 9, further comprising a network-node-metadata memory, the network-node-metadata memory being configured to store information associated with quantum states stored in the quantum memory (230A, 230B), wherein the information includes a logical identifier of the quantum state, a storage location within the quantum memory (230A, 230B), and a timestamp indicating a time of storage of a quantum state.

11. The quantum computing network node (202A, 202B) of claim 9 or 10, wherein the quantum computing network node (202A, 202B) is configured to synchronize operations with another quantum computing network node (202A, 202B) using a common timing signal, the common timing signal being derived from a network provider plane (105) or generated independently within the application plane (102).

12. The quantum computing network node (202A, 202B) of any of the claims 9 to 11, wherein the quantum computing network node (202A, 202B) is configured to receive pre-distributed entangled quantum states from a quantum service provider and store them in the quantum memory (230A, 230B) before execution of quantum state transfer operations.

13. A quantum communication system (200), the quantum communication system (200) comprising:
a) a first quantum computing network node A (202A), deployed in an application plane (102), the first quantum computing network node A (202A) having a quantum computer A (204A), a quantum memory A (230A), and a classical communication interface (206) to a second quantum computing network node B (202B);
b) the second quantum computing network node B (202B), deployed in the application plane (102), the second quantum computing network node B (202B) having a quantum computer B (204B), a quantum memory B (230B), and a classical communication interface (206) to the first quantum computing network node A (202A);
wherein the quantum communication system (200) is configured to execute a method according to claims 1 to 7.

14. The quantum communication system (200) of claim 13, wherein the quantum communication system (200) comprises a network provider plane (105) configured to distribute entangled quantum states to the first and second quantum computing network nodes (202A, 202B).

15. The quantum communication system (200) of claim 13, wherein the quantum communication system (200) comprises a control system (250) configured to coordinate quantum operations, entanglement distribution, and timing synchronization between the first and second quantum computing network nodes (202A, 202B), wherein the control system (250) is implemented as a centralized or distributed system.
